# EUROPÄISCHE PATENTSCHRIFT

(11) **EP 1 415 580 B1**
(45) Veröffentlichungstag und Bekanntmachung des Hinweises auf die Patenterteilung: **02.03.2005**
(21) Anmeldenummer: 03024729.0
(22) Anmeldetag: 29.10.2003
(51) Int. Cl.: A47J 31/54

(54) **Einrichtung zum Ableiten von Restdampf und Restwasser aus dem Heizer einer Heissgetränkmaschine, insbesondere Kaffeemaschine**
Device for draining off residual steam and residual water from the heater of a hot drink dispenser, especially a coffee machine
Dispositif pour évacuer la vapeur residuelle et l'eau residuelle d'une chauffe-eau d'un distributeur de boissons chaudes, en particulier d'une machine à café

(30) Priorität: 04.11.2002 DE 20217068 U
(43) Veröffentlichungstag der Anmeldung: 06.05.2004
(73) Patentinhaber: Eugster/Frismag AG, 8590 Romanshorn (CH)
(72) Erfinder: Eicher, Heinz, 8645 Jona (CH)
(74) Vertreter: Schubert, Siegmar

(56) Entgegenhaltungen:
- EP-A- 0 853 909
- DE-A- 4 208 854
- GB-A- 944 653
- GB-A- 2 367 550

## Beschreibung

Die Erfindung betrifft eine Einrichtung zum Ableiten von Restdampf und Restwasser aus dem Heizer einer Kaffeemaschine nach dem Oberbegriff des Anspruchs 1.

In bekannten Fluid-Systemen von Kaffeemaschinen, wie z.B. in GB-A-2 367 550, und anderen Heißgetränkemaschinen besteht generell der Wunsch, nach einer Kaffee-Extraktion oder einem Heißwasserbezug hierfür nicht verwendetes, restliches in dem Heizer befindliches Wasser, welches durch in dem Heizer nach dem Abschalten vorhandene Restwärme verdampft oder als Restwasser bzw. Entspannungswasser flüssig vorliegt, aus dem Fluid-System auszuscheiden und in einem Auffangbehälter, der in der Regel in der Kaffeemaschine angeordnet ist, zu sammeln. In gleicher Weise wird auch vorgegangen, wenn der Heizer nach betriebsmäßiger Dampferzeugung, um Dampf an eine Dampfdüse bzw. Aufschäumdüse abzugeben, durch Zufuhr von Frischwasser bis zum Erreichen einer für Kaffeezubereitung herabgesetzten Temperatur abgekühlt wird, das heißt, auch in diesem Fall sind nicht nutzbarer Dampf und ggf. heißes Wasser in den Auffangbehälter abzugeben. Der bei diesem Vorgang erzeugte Dampf wird auch als Restdampf oder entspannter Dampf bezeichnet, da sein Druck gegenüber dem betriebsmäßig erzeugten Dampf herabgesetzt ist, und zwar speziell durch Öffnen einer Restfluidleitung und Abschalten einer Wasserpumpe, die sonst Frischwasser in den Heizer drückt, der typisch als Durchlauferhitzer ausgebildet ist.

Eine entsprechende aus der Praxis bekannte Einrichtung zum Ableiten von Restdampf gemäß dem Oberbegriff des Anspruchs 1 umfaßt somit eine Restfluidleitung, die über ein schaltbares Ventil mit dem Heizer in fluidleitender Verbindung steht und zu einem Auffangbehälter in der Kaffeemaschine führt. Nachteilig ist bei dieser Einrichtung, daß der Restdampf innerhalb der Kaffeemaschine teilweise unkontrolliert entweichen kann, wodurch Bestandteile in dem Inneren der Kaffeemaschine, insbesondere die Elektronik, beeinträchtigt werden können bzw. ganz ausfallen, und ungewünschte mikrobiologische Kulturen sich beschleunigt ausbilden können. Hingegen war in der Regel eine Entsorgung des Restdampfs und Restwassers außerhalb des Gehäuses wegen der damit verbundenen Verbrühungsgefahr nicht vorgesehen.

Der vorliegenden Erfindung liegt daher die Aufgabe zugrunde, den Restdampf in einer Heißgetränkemaschine, insbesondere Kaffeemaschine, der eingangs genannten Gattung so innerhalb der Maschine zu entsorgen, daß dadurch keine schädigende Einwirkung auf Komponenten im Inneren der Heißgetränkemaschine und keine beschleunigte Bildung von mikrobiologischen Kulturen infolge von Feuchtigkeitszufuhr auftreten.

Diese Aufgabe wird mit der Einrichtung zum Ableiten von Restdampf und Restwasser der eingangs genannten Gattung bei Ausbildung mit den in dem kennzeichnenden Teil des Anspruchs 1 angegebenen Merkmalen gelöst.

Mit dieser Einrichtung wird der Restdampf, der in dem Heizer nach Abgabe des zur Getränke- bzw. Kaffeezubereitung nutzbaren Heißwassers bzw. Brühwassers bzw. der Dampferzeugung entsteht, sowie das Restwasser in der Entspannungsphase, in der das schaltbare Ventil geöffnet ist, über dieses und die Restfluidleitung nicht unmittelbar in einen Auffangbehälter in der Heißgetränkemaschine geleitet, sondern über eine Restfluidstrecke in einem Wärme tauschenden und Wärme speichernden Kondensator. In diesem wird der Restdampf soweit abgekühlt, daß er kondensiert und in wäßriger Phase in den Auffangbehälter läuft. Die von dem Restdampf und Restwasser dabei abgegebene Wärme, insbesondere Kondensationswärme, wird von dem Wärme speichernden Wärmespeicher aufgenommen. Bei einer anschließenden Einspeisung von Frischwasser in den Heizer strömt das Frischwasser durch eine in die Frischwasserleitung eingefügte Frischwasserstrecke, die ebenso wie die Restfluidstrecke Bestandteil des Wärme tauschenden und Wärme speichernden Kondensators ist. Demzufolge nimmt das durch die Frischwasserstrecke geförderte Frischwasser Wärme von dem Wärme tauschenden und Wärme speichernden Kondensator auf und kann in dem Heizer mit geringerem Energieaufwand auf die gewünschte Temperatur erhitzt bzw. verdampft werden. Dabei wird der Kondensator auf eine genügend tiefe Temperatur zur Kondensation des Restdampfes abkühlt.

Daraus ergeben sich mehrere Vorteile: Der Restdampf in der Restfluidleitung wird nach Öffnen des schaltbaren Ventils nicht in dampfförmiger Phase in der Heißgetränkemaschine abgegeben, und ein unkontrollierbarer Niederschlag von Feuchtigkeit wird vermieden. Die Sicherheit der Heißgetränkemaschine wird erhöht. Andererseits wird die dem Restwasser und dem Restdampf insbesondere durch Kondensation entzogene Wärme zur Vorwärmung des Frischwassers genutzt, welches in dem Heizer anschließend mit entsprechend verringertem Energieeinsatz weiter erhitzt und ggf. verdampft werden kann. Insbesondere kann durch die Vorwärmung des Frischwassers ein Teil der zur Kaffeezubereitung benötigten Extraktionswärme bereitgestellt werden. Der hierzu erforderliche apparative Aufwand, der im Wesentlichen nur aus dem zusätzlichen Wärme tauschenden und Wärme speichernden Kondensator besteht, ist gering.

Bevorzugt wird ein thermisches Gleichgewicht zwischen Aufwärmen und Abkühlen des Kondensators gemäß Anspruch 2 erreicht durch eine sequentielle Steuerung jeweils eines Frischwasserbezugs des Heizers, bei dem eine Wasserpumpe, die in der Frischwasserleitung angeordnet ist, eingeschaltet ist und Frischwasser durch die Frischwasserstrecke zu dem Heizer und weiter über ein in einer Ausgangsleitung des Heizers angeordnetes Überdruckventil, welches sich bei Betriebsdruck der Wasserpumpe öffnet, fördert, und eines jeweils darauf folgenden Entspannungsvorgangs, bei dem die Wasserpumpe ausgeschaltet ist und das schaltbare Ventil geöffnet ist, wodurch über dieses Restdampf und Restwasser aus dem Heizer durch die Restfluidstrecke strömt, sowie durch eine derartige Dimensionierung des Wärme tauschenden und Wärme speichernden Kondensators, daß sich bei mehreren - jeweils durch einen Entspannungsvorgang unterbrochenen - Frischwasserbezügen das thermische Gleichgewicht des Wärme tauschenden und Wärme speichernden Kondensators einstellt, bei dem jeweils während des Entspannungsvorgangs der Restdampf in der Restfluidstrecke im wesentlichen vollständig kondensiert. Hierzu werden das Material und die Masse des Kondensators so ausgelegt, daß auch im Rahmen intensiven Kaffeebezugs die Kondensationswirkung während des Entspannungsvorgangs aufrechterhalten bleibt.
Dazu können das schaltbare Ventil sowie die Wasserpumpe bevorzugt zeitgleich geschaltet werden.

Es kann aber statt dessen die Möglichkeit vorgesehen werden, diese Schaltvorgänge nacheinander und unabhängig voneinander z.B. dann zu steuern, wenn möglichst rasch und energieverbrauchsarm Dampf z.B. zweimal hintereinander für Cappuccinozubereitung benötigt wird. In diesem Fall wird der Dampf in dem Heizer zwischen den beiden Dampferzeugungsvorgängen nicht entspannt, sondern erst im Anschluß an den zweiten Dampferzeugungsvorgang.

Zu der gerätemäßigen Realisierung der erfindungsgemäßen Einrichtung kann weitgehend von den bisherigen Komponenten der bekannten Einrichtung zum Ableiten von Restdampf und Restwasser Gebrauch gemacht werden, die in der vorliegenden Verbindung mit dem Wärme tauschenden und Wärme speichemden Kondensator so genutzt werden können, daß der Wärmetausch mit dem im Heizer verdampften Restwasser sowie mit dem in wässriger Phase verbleibenden Restwasser und dem anschließend dem Heizer zuzuführenden Frischwasser optimiert werden kann.

Hierzu kann die Restfluidleitung mit einem schaltbaren Ventil von dem Frischwassereingang des Heizers oder dessen Ausgangsleitung stromaufwärts des Überdruckventils abgezweigt sein und somit die Restfluidstrecke des Kondensators je nach Ausbildung und Anordnung des Heizers optimal beaufschlagen, und zwar während der Entspannungsphase, wenn das schaltbare Ventil geöffnet ist.

Einfach zeitlich zu steuern ist ein Magnetventil nach Anspruch 6.

Gemäß Anspruch 7 weist der Kondensator einfach einen Block aus Wärme leitendem und Wärme speicherndem Material auf, in dem die Restfluidstrecke und die Frischwasserstrecke angeordnet sind.

Fertigungsgünstig kann der Wärme speichernde Block nach Anspruch 8 aus Aluminium bestehen, in dem die Frischwasserstrecke als ein in den Block eingegossenes Chromstahlrohr ausgebildet ist. Das Chromstahlrohr verhindert eine Migration des Wassers durch das Aluminium.

Weiter fertigungsgünstig ist der Kondensator gemäß Anspruch 9 mit den Merkmalen ausgebildet, daß der Block parallel zu einer Ebene, in welcher die Restfluidstrecke liegt, so geteilt ist, daß die Restfluidstrecke bei voneinander entfernten Teilen des Blocks in einem der beiden Teile offen liegt. Die Restfluidstrecke kann deswegen einfach aus der Oberfläche des einen Blockteils ausgeformt werden.

Eine kompakte Ausbildung des Blocks wird weiterhin mit einer übereinanderliegenden Anordnung der Frischwasserstrecke und der Restfluidstrecke in zwei parallelen Ebenen ermöglicht. Damit kann ein guter Wärmeübergang zwischen der Restfluidstrecke und der Frischwasserstrecke erreicht werden. Zu dem letztgenannten Zweck verlaufen die Restfluidstrecke und die Frischwasserstrecke gemäß Anspruch 11 bevorzugt wellenlinienförmig oder mäanderförmig abschnittsweise parallel in dem Block des Kondensators.

Der Heizer ist zweckmäßig als Durchlauferhitzer ausgebildet. Das Wasser, welches in dem Durchlauferhitzer nach Erhitzen bzw. Verdampfen des zur Getränkzubereitung genutzten Wassers zunächst noch verbleibt, wird durch die Restwärme in dem Durchlauferhitzer zu Restdampf verdampft, der aus dem Frischwassereingang des Durchlauferhitzers austreten kann, um dem Kondensator zugeführt zu werden.

Die Erfindung wird im folgenden anhand einer Zeichnung mit zwei Figuren erläutert, woraus sich weitere vorteilhafte Merkmale und Wirkungen ergeben können. Es zeigt:

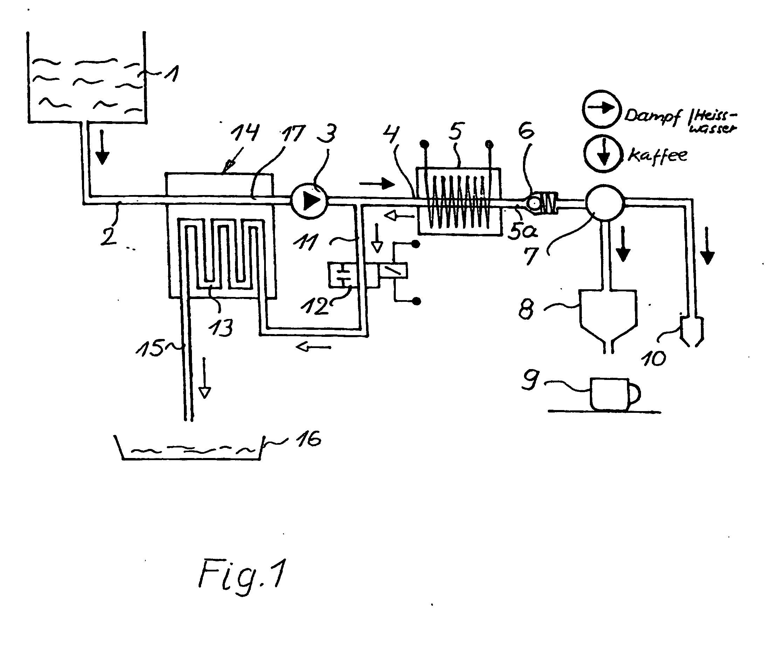

- Figur 1: eine schematische Gesamtdarstellung einer Einrichtung zum Ableiten von Restdampf und Restwasser aus einem Heizer einer Kaffeemaschine und
- Figur 2: eine Einzelheit hieraus, nämlich einen Wärme tauschenden und Wärme speichernden Kondensator in einer schaubildlichen Darstellung.

In der Zeichnung ist mit 1 ein Frischwasserbehälter bezeichnet, der kaltes Frischwasser enthält. Von ihm führt eine Frischwasserleitung 2 über eine Wasserpumpe 3 zu einem Frischwassereingang 4 eines Heizers 5, der als Durchlauferhitzer ausgebildet ist. Eine Ausgangsleitung 5a des Heizers 5 steht über ein als federbelastetes Kugelventil ausgebildetes Überdruckventil 6 mit einem Wahlschalter 7 in Verbindung, der einerseits zu einem Brühkopf 8 als wesentlichem Bestandteil einer Kaffeemaschine führt, unter dem eine Kaffeetasse 9 angedeutet ist, sowie alternativ zu einer Aufschäumdüse bzw. Dampfdüse 10, aus der Dampf oder Heißwasser abgegeben werden kann. Die zur Kaffeezubereitung oder Dampferzeugung zu wählenden Einstellungen des Wahlschalters 7 sind in der Zeichnung symbolisch angedeutet.

Zur Beseitigung von Restdampf und Restwasser aus dem Heizer 5 zweigt hier von dessen tief liegendem Frischwassereingang 4 eine Restfluidleitung 11 ab, in die ein als Magnetventil ausgebildetes schaltbares Ventil 12 eingefügt ist. Die Restfluidleitung 11 führt zu einer Restfluidstrecke 13 eines Wärme tauschenden und Wärme speichernden Kondensators 14, und eine Ausgangsleitung 15 an der Restfluidstrecke 13 mündet in einen Auffangbehälter 16, der als Kondensatauffangbehälter 16 ausgebildet in einem Gehäuse der Kaffeemaschine eingeschlossen sein kann.

Der Kondensator 14 wird im Wesentlichen vervollständigt durch eine Frischwasserstrecke 17, die in die Frischwasserleitung 2 eingefügt ist.

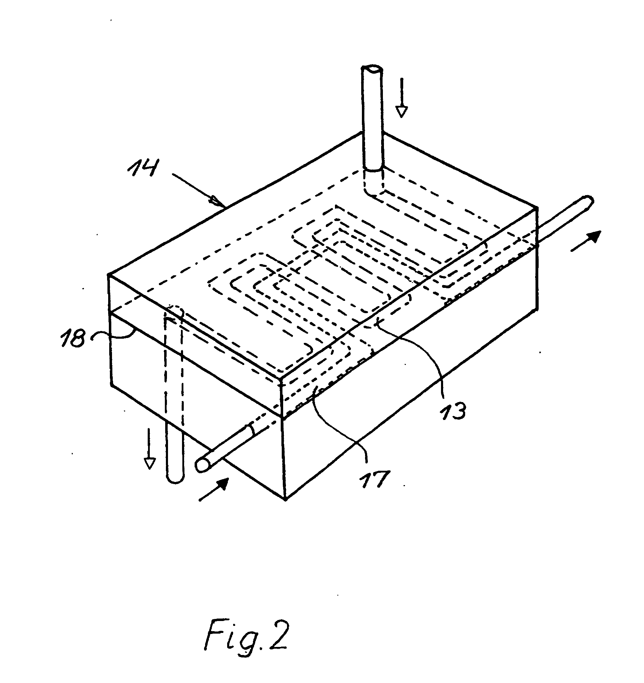

Einzelheiten des Wärme tauschenden und Wärme speichernden Kondensators 14 sind aus Figur 2 ersichtlich. Der Kondensator 14 besteht im Wesentlichen aus einem nicht bezeichneten zweigeteilten Block aus Aluminium mit der in einer Ebene mäanderförmig ausgeformten Restfluidstrecke 13 und der in einer darunter parallel liegenden Ebene ebenfalls mäanderförmig ausgebildeten Frischwasserstrecke 17. Der Block ist in einer dazu parallelen Ebene 18 zweigeteilt, so daß die Restfluidstrecke 13 von oben aus dem unteren Teil des Blocks einfach ausgearbeitet sein kann. Der obere Teil des Blocks kann hingegen an seiner Unterseite glatt sein. Die Frischwasserstrecke ist in Form eines Chromstahlrohrs bzw. Edelstahlrohrs in den unteren Teil des Blocks eingebracht. Wie aus Figur 2 ersichtlich, verlaufen die Restfluidstrecke 13 und die Frischwasserstrecke 17 abschnittsweise parallel. Sie stehen in gut Wärme leitenden Kontakt mit dem umgebenden Aluminium des Blocks, dessen Wärmekapazität bei der Funktion des Kondensators genutzt wird.

Das Überdruckventil 6 am Ausgang des Heizers 5 ist so dimensioniert, daß es den Ausgang zu der Frischwasserstrecke 17 selbsttätig öffnet, wenn auf das Ventil ein Mindestdruck gleich dem Betriebsdruck der Wasserpumpe 3 wirkt, der sich durch den als Durchlauferhitzer ausgebildeten Heizer 5 hindurch fortsetzt. In diesem kann der Druck durch Verdampfungsvorgänge noch ansteigen. Bei abgeschalteter Wasserpumpe 3 ist hingegen das Überdruckventil 6 geschlossen, auch wenn sich in dem Durchlauferhitzer durch Restwärme Restdampf bildet.

Zum Schalten der Wasserpumpe 3 und des schaltbaren Ventils 12 dienen nicht dargestellte Schaltkontakte, die so betätigbar sind, daß entweder das schaltbare Ventil 12 geöffnet ist oder die Wasserpumpe 3 Wasser zu dem Heizer 5 fördert. Zur Zubereitung des Kaffees, oder - in anderer Stellung des Wahlschalters 7 - von Dampf oder Heißwasser wird durch die entsprechend der benötigten Frischwassermenge eingeschaltete Wasserpumpe 3 kaltes Frischwasser durch die Frischwasserleitung 2 und durch die Frischwasserstrecke 17 in den Frischwassereingang 4 des Heizers 5 gefördert, in diesem erwärmt oder verdampft und durch das geöffnete Überdruckventil 6 als Brühwasser oder in den Brühkopf 8 oder als Dampf bzw. Heißwasser in die Aufschäumdüse 10 entlassen. Das schaltbare Ventil 12 ist dabei geschlossen, so daß die Restfluidstrekke 13 des Kondensators 14 nicht mit dem Frischwasser während des Frischwasserbezugs des Heizers 5 beaufschlagt wird. Erst bei Beendigung des Brühvorgangs bzw. Aufschäumvorgangs wird die Wasserpumpe 3 abgeschaltet und gleichzeitig das schaltbare Ventil 12 geöffnet. Da der Betriebsdruck der Wasserpumpe 3 entfällt, schließt das Überdruckventil 6, und der in dem Heizer 5 durch Restwärme entstehende Restdampf und das Restwasser strömen über die Restfluidleitung 11, das schaltbare Ventil 12 in die Restfluidstrecke 13 des Kondensators, in dem der Restdampf abgekühlt wird und kondensiert und auch das Restwasser Wärme abgeben kann. Das Kondenswasser läuft durch die Ausgangsleitung 15 in den Auffangsbehälter 16. Die durch die Abkühlung und insbesondere Kondensation des Restdampfs in dem Kondensator 14 zwischengespeicherte Wärme kann bei einem nachfolgenden erneuten Einschalten der Wasserpumpe 3 und Schließen des schaltbaren Ventils 12 das durch die Frischwasserstrecke 17 geförderte Frischwasser erwärmen, wobei sich der Wärme tauschende und Wärme speichernde Kondensator 14 gleichzeitig abkühlt. Das erwärmte Frischwasser gelangt in den Frischwassereingang 4 des Heizers 15. In dem Heizer 15 braucht dem erwärmten Frischwasser somit zur Erwärmung auf die gewünschte Solltemperatur bzw. Kaffee-Extraktionstemperatur oder zum Verdampfen weniger elektrische Energie zugeführt zu werden als in dem Fall, in dem kaltes Frischwasser in den Heizer gelangen würde. Die Einrichtung mit dem Kondensator 14 und der Steuerung der Wasserpumpe 3 und des schaltbaren Ventils 12 sind so ausgelegt, daß sich in dem Kondensator 14 ein genügend tiefes Temperaturgleichgewicht einstellt, um die Kondensationswirkung bei Entspannungsvorgängen, wenn Restdampf und Restwasser in die Restfluidstrecke 13 eintreten, auch bei großen Kaffeebezug aufrechtzuerhalten.

### Bezugszahlenliste:

- 1.: Frischwasserbehälter
- 2.: Frischwasserleitung
- 3.: Wasserpumpe
- 4.: Frischwassereingang
- 5.: Heizer
- 5a: Ausgangsleitung
- 6.: Überdruckventil
- 7.: Wahlschalter
- 8.: Brühkopf
- 9.: Kaffeetasse
- 10.: Aufschäumdüse
- 11.: Restfluidleitung
- 12.: Schaltbares Ventil
- 13.: Restfluidstrecke
- 14.: Wärme tauschender und Wärme leitender Kondensator
- 15.: Ausgangsleitung
- 16.: Auffangbehälter
- 17.: Frischwasserstrecke
- 18.: Ebene

## Patentansprüche

1. Einrichtung zum Ableiten von Restdampf und Restwasser aus dem Heizer (5) einer Heißgetränkemaschine, insbesondere Kaffeemaschine, mit einer Restfluidleitung (11), die über ein schaltbares Ventil (12) mit dem Heizer (5) in fluidleitender Verbindung steht und zu einem Auffangbehälter (16) insbesondere in der Heißgetränkemaschine führt, wobei mit einem Frischwassereingang (4) des Heizers eine Frischwasserleitung (2) verbunden ist, über die der Heizer (5) mit Frischwasser beaufschlagbar ist,
**dadurch gekennzeichnet,**
**daß** die Einrichtung einen Wärme tauschenden und Wärme speichernden Kondensator (14) mit einer Restfluidstrecke (13), einer Frischwasserstrekke (17) und einem mit diesen Strecken in Wärme leitender Verbindung stehenden, Wärme speichernden Medium umfaßt, daß die Restfluidstrekke (13) an die Restfluidleitung (11) angeschlossen ist und daß die Frischwasserstrecke (17) in der Frischwasserleitung (2) eingefügt ist.

2. Einrichtung nach Anspruch 1, **gekennzeichnet durch** eine sequenzielle Steuerung jeweils eines Frischwasserbezugs des Heizers (5), bei dem eine Wasserpumpe (3), die in der Frischwasserleitung (2) angeordnet ist, eingeschaltet ist und Frischwasser **durch** die Frischwasserstrecke (17) zu dem Heizer (5) und weiter über ein in einer Ausgangsleitung (5a) des Heizers (5) angeordnetes Überdruckventil (6), welches sich bei Betriebsdruck der Wasserpumpe (3) öffnet, fördert, und eines jeweils darauffolgenden Entspannungsvorgangs, bei dem die Wasserpumpe ausgeschaltet ist, das Überdruckventil schließt und das schaltbare Ventil (12) geöffnet ist, wodurch über dieses Restdampf und Restwasser **durch** die Restfluidstrecke (13) strömt, sowie **durch** eine derartige Dimensionierung des Wärme tauschenden und Wärme speichernden Kondensators (14), daß sich bei mehreren - jeweils **durch** einen Entspannungsvorgang unterbrochenen - Frischwasserbezügen ein thermisches Gleichgewicht des Wärme tauschenden und Wärme speichemden Kondensators (14) einstellt, bei dem jeweils während des Entspannungsvorgangs der Restdampf in der Restfluidstrecke (13) im wesentlichen vollständig kondensiert.

3. Einrichtung nach Anspruch 1 oder 2,
**dadurch gekennzeichnet,**
**daß** die Restfluidleitung (11) mit dem schaltbaren Ventil (12) von dem Frischwassereingang (4) des Heizers (5) abgezweigt ist.

4. Einrichtung nach Anspruch 2,
**dadurch gekennzeichnet,**
**daß** die Restfluidleitung (11) mit dem schaltbaren Ventil (12) von einer Ausgangsleitung des Heizers (5) stromaufwärts des Überdruckventils (6) abgezweigt ist.

5. Einrichtung nach einem der Ansprüche 2 - 4,
**dadurch gekennzeichnet,**
**daß** das schaltbare Ventil (12) und die Wasserpumpe zeitgleich schaltbar sind.

6. Einrichtung nach einem der vorangehenden Ansprüche,
**dadurch gekennzeichnet,**
**daß** das schaltbare Ventil (12) als Magnetventil ausgebildet ist.

7. Einrichtung nach einem der vorangehenden Ansprüche,
**dadurch gekennzeichnet,**
**daß** der Wärme tauschende und Wärme speichernde Kondensator (14) einen Block aus Wärme leitendem und Wärme speicherndem Material aufweist, in dem die Restfluidstrecke (13) und die Frischwasserstrecke (17) angeordnet sind.

8. Einrichtung nach Anspruch 7,
**dadurch gekennzeichnet,**
**daß** der Wärme speichernde Block aus Aluminium besteht und daß die Frischwasserstrecke (17) ein in den Block eingegossenes Chromstahlrohr ist.

9. Einrichtung nach Anspruch 7 oder 8,
**dadurch gekennzeichnet,**
**daß** der Block parallel zu einer Ebene, in welcher die Restfluidstrecke (13) liegt, so geteilt ist, daß die Restfluidstrecke (13) bei voneinander entfernten Teilen des Blocks in einem der beiden Teile offen liegt.

10. Einrichtung nach einem der Ansprüche 7-9,
**dadurch gekennzeichnet,**
**daß** die Restfluidstrecke (13) und die Frischwasserstrecke (17) in zwei parallelen Ebenen in dem Block des Kondensators übereinanderliegend verlaufen.

11. Einrichtung nach einem der vorangehenden Ansprüche,
**dadurch gekennzeichnet,**
**daß** die Restfluidstrecke (13) und die Frischwasserstrecke (17) wellenlinienförmig oder mäanderförmig abschnittsweise parallel in dem Block des Kondensators (14) verlaufen.

12. Einrichtung nach einem der vorgehenden Ansprüche,
**dadurch gekennzeichnet,**
**daß** der Heizer (5) ein Durchlauferhitzer ist.

## Claims

1. A device for draining off residual steam and residual water from the heater (5) of a hot beverage dispenser, more specifically a coffee machine, having a residual fluid line (11) that is in fluid-conducting communication with the heater (5) by a switchable valve (12) and leads to a collecting container (16) particularly in the hot beverage dispenser, a fresh water inlet (4) of the heater being connected to a fresh water line (2) by which fresh water is admittable into the heater,
**characterized in that**,
the device includes a heat exchanging and a heat storing condenser (14) having a residual fluid conduit (13), a fresh water conduit (17) and a heat storing medium that is in heat-conducting communication with these conduits, the residual fluid conduit (13) is connected to the residual fluid conduit (11) and the fresh water conduit is fit into the fresh water conduit.

2. The device according to claim 1, **characterized by** a sequential control of a fresh water supply of the heater (5), during which a water pump (3) that is disposed in the fresh water conduit (2) is turned on and delivers fresh water to the heater (5) through the fresh water conduit (17) and further via a pressure relief valve (6) disposed in an outlet line (5a) of the heater (5) that opens at operating pressure of the water pump (3), and of a following pressure relief process, respectively, during which the water pump is turned of, the pressure relief valve is closed and the switchable valve (12) is opened, which allows residual steam and residual water to flow through the residual fluid length (13) via said switchable valve, and by dimensioning the heat exchanging and heat storing condenser (14) in such a manner that with several fresh water supplies - each time interrupted by a pressure relief process - a thermal equilibrium of the heat exchanging and heat storing condenser (14) results with the residual steam in the residual fluid conduit (13) condensing substantially completely at the time of the pressure relief process.

3. The device according to claim 1 or 2,
**characterized in that**,
the residual fluid line (11) with the switchable valve (12) is branched off the fresh water inlet (4) of the heater (5).

4. The device according to claim 2,
**characterized in that**,
the residual fluid line (11) with the switchable valve (12) is branched off an outlet line of the heater (5) upstream of the pressure relief valve (6).

5. The device according to one of the claims 2-4,
**characterized in that**,
the switchable valve (12) and the water pump are switchable simultaneously.

6. The device according to one of the afore-mentioned claims,
**characterized in that**,
the switchable valve (12) is configured as a solenoid valve.

7. The device according to one of the afore-mentioned claims,
**characterized in that**,
the heat exchanging and heat storing condenser (14) comprises a block made of a heat conducting and heat storing material in which are disposed the residual fluid conduit (13) and the fresh water conduit (17).

8. The device according to claim 7,
**characterized in that**,
the heat storing bock consists of aluminium and that the fresh water conduit (17) is a chrome steel tube cast into the block.

9. The device according to claims 7 or 8,
**characterized in that**,
the block is divided parallel to a plane in which the residual fluid conduit (13) is arranged in such a manner that, with the parts of the block being spaced apart, the residual fluid conduit (13) lies open either part.

10. The device according to one of the claims 7 - 9,
**characterized in that**,
the residual fluid conduit (13) and the fresh water conduit (17) extend one above the other in two parallel planes in the block of the condenser.

11. The device according to one of the afore-mentioned claims,
**characterized in that**,
the residual fluid conduit (13) and the fresh water conduit (17) extend in the block (14) in a partially parallel wave or meander line.

12. The device according to one of the afore-mentioned claims,
**characterized in that**,
the heater (5) is an instantaneous water heater.

## Revendications

1. Dispositif pour évacuer de la vapeur et de l'eau résiduelle de l'appareil de chauffage (5) d'un distributeur de boisson chaude, notamment des machines à café, ayant un conduit de fluide résiduel (11) qui est en liaison conductrice de fluide avec l'appareil de chauffage par l'intermédiaire d'une soupape de commutation (12) et qui mène à un conteneur de récupération (16), un conduit d'eau fraîche (2) par l'intermédiaire duquel l'appareil de chauffage (5) est susceptible d'être alimenté étant relié à une arrivée d'eau fraîche (4) de l'appareil de chauffage,
**caractérisé en ce que**,
le dispositif comprend un condenseur accumulateur et échangeur de chaleur (14) ayant un segment de fluide résiduel (13), un segment d'eau fraîche et un milieu accumulateur de chaleur en liaison thermoconductrice avec ces segments et que le segment de fluide résiduel (13) est relié au conduit de fluide résiduel (11) et que le segment d'eau fraîche est insérée dans le conduit d'eau fraîche.

2. Dispositif selon la revendication 1, **caractérisé par** une commande séquentielle respectivement d'un approvisionnement en eau fraîche de l'appareil de chauffage (5) lors duquel une pompe à eau (3) qui est disposée dans le conduit d'eau fraîche (2) est mise en service et achemine de l'eau fraîche par l'intermédiaire du segment d'eau fraîche (17) vers l'appareil de chauffage (5) et à travers une soupape de surpression (6) qui s'ouvre en cas de pression de fonctionnement de la pompe à eau (3) disposée dans un conduit de sortie (5a) de l'appareil de chauffage (5) et respectivement d'un processus de détente lors duquel la pompe à eau est mise hors service, la soupape de surpression se ferme et la soupape de commutation (12) est ouverte, ce qui permet l'écoulement de la vapeur et de l'eau résiduelle à travers le segment de fluide résiduel (13), ainsi que par un dimensionnement du condenseur accumulateur et échangeur de chaleur (14) de telle façon que lors de plusieurs approvisionnements en eau fraîche - interrompus respectivement par un processus de détente - s'installe un équilibre thermique du condenseur accumulateur et échangeur de chaleur (14) par lequel la vapeur résiduelle dans le segment de fluide résiduel (13) condense sensiblement entièrement durant le processus de détente respectivement.

3. Dispositif selon la revendication 1 ou 2,
**caractérisé en ce que**
le segment de fluide résiduel (11) avec la soupape de commutation (12) est déviée de l'arrivée d'eau fraîche (4) de l'appareil de chauffage (5).

4. Dispositif selon la revendication 2,
**caractérisé en ce que**
le segment de fluide résiduel (11) avec la soupape de commutation (12) est déviée du conduit de sortie de l'appareil de chauffage (5) en amont de la soupape de surpression (6).

5. Dispositif selon l'une quelconque des revendications 2 - 4,
**caractérisé en ce que**
la soupape de commutation (12) et la pompe à eau sont commutables simultanément.

6. Dispositif selon l'une quelconque des revendications précédentes,
**caractérisé en ce que**
la soupape de commutation (12) est conformée en tant qu'électrovalve.

7. Dispositif selon l'une quelconque des revendications précédentes,
**caractérisé en ce que**,
le condenseur accumulateur et échangeur de chaleur (14) comporte un bloc en matériau conducteur et accumulateur de chaleur dans lequel sont disposés le segment de fluide résiduel (13) et le segment d'eau fraîche (17).

8. Dispositif selon la revendication 7,
**caractérisé en ce que**
le bloc accumulateur de chaleur est en aluminium et que le segment d'eau fraîche (17) est un tuyau d'acier au chrome coulé dans le bloc.

9. Dispositif selon la revendication 7 ou 8,
**caractérisé en ce que**
le bloc est divisé parallèlement à un plan dans lequel est situé le segment de fluide résiduel (13) de telle façon que le segment de fluide résiduel (13) est ouvert dans l'une des deux parties du bloc lorsque celles-ci sont séparées.

10. Dispositif selon l'une quelconque des revendications 7 - 9,
**caractérisé en ce que**
le segment de fluide résiduel (13) et le segment d'eau fraîche s'étendent l'un au-dessus de l'autre dans deux plans parallèles à l'intérieur du bloc du condenseur.

11. Dispositif selon l'une quelconque des revendications précédentes,
**caractérisé en ce que**
le segment de fluide résiduel (13) et le segment d'eau fraîche (17) s'étendent parallèlement par secteurs en forme de ligne ondulée ou de méandre dans le bloc du condenseur (14).

12. Dispositif selon l'une quelconque des revendications précédentes,
**caractérisé en ce que**
l'appareil de chauffage (5) est un chauffe-eau instantané.
